# EUROPÄISCHE PATENTSCHRIFT

(11) **EP 1 122 274 B1**
(45) Veröffentlichungstag und Bekanntmachung des Hinweises auf die Patenterteilung: **15.10.2003**
(21) Anmeldenummer: 01101141.8
(22) Anmeldetag: 22.01.2001
(51) Int. Cl.: C08G 61/12, H01B 1/12

(54) **Verfahren zur Herstellung von wasserlöslichen pi-konjugierten Polymeren**
Method for making pi-conjugated water soluble polymers
Méthode de production de polymeres pi-conjugués solubles dans l'eau

(30) Priorität: 03.02.2000 DE 10004725
(43) Veröffentlichungstag der Anmeldung: 08.08.2001
(73) Patentinhaber: BAYER AG, 51368 Leverkusen (DE); AGFA-GEVAERT, 2640 Mortsel (BE)
(72) Erfinder: Groenendaal, Lambertus, Dr., 9112 Sinaai (BE); Jonas, Friedrich, Dr., 52066 Aachen (DE); Cloots, Tom, 1840 Londerzeel (BE); Louwet, Frank, Dr., 3590 Diepenbeek (BE)
(74) Vertreter: Zobel, Manfred, Dr.

(56) Entgegenhaltungen:
- US-A- 5 111 327
- O. STEPHAN, P. SCHOTTLAND, P-Y. LE GALL, C. CHEVROT, C. MARIET, M. CARRIER: JOURNAL OF ELECTROANALYTICAL CHEMISTRY, Nr. 443, 1998, Seiten 217-226, XP000995724

## Beschreibung

Die Erfindung betrifft die Herstellung von wasserlöslichen π-konjugierten Polymeren durch chemische Polymerisation in Wasser.

Die Verbindungsklasse der π-konjugierten Polymeren war in den letzten Jahrzehnten der Gegenstand zahlreicher Veröffentlichungen. Sie werden auch als leitfähige Polymere oder als synthetische Metalle bezeichnet.

Wegen der erheblichen Delokalisierung der π-Elektronen entlang der Hauptkette zeigen diese Polymere interessante (nichtlineare) optische Eigenschaften und nach Oxidation oder Reduktion stellen sie gute elektronische Leiter dar. Dadurch werden diese Verbindungen voraussichtlich eine führende und aktive Rolle auf verschiedenen praktischen Anwendungsgebieten übernehmen, wie z.B. in der Datenspeicherung, der optischen Signalverarbeitung, der Unterdrückung elektromagnetischer Störungen und der Sonnenenergieumwandlung, sowie in wiederaufladbaren Batterien, lichtemittierenden Dioden, Feldeffekttransistoren, Leiterplatten, Sensoren und antistatischen Materialien.

Beispiele für bekannte π-konjugierte Polymere sind Polypyrrole, Polythiophene, Polyaniline, Polyacetylene, Polyphenylene und Poly(p-phenylen-vinylene). Sie können durch verschiedene chemische und elektrochemische Polymerisationstechniken hergestellt werden. Für die technische Herstellung dieser π-konjugierten Polymeren ist die chemische Polymerisation der monomeren Verbindungen das günstigste Verfahren.

Die Entwicklung der π-konjugierten Polymeren wurde lange Zeit wegen der Probleme bei ihrer Verarbeitung behindert. Einige dieser Probleme wurden durch die Einführung der ersten löslichen konjugierten Polymere, nämlich der Poly(3-alkylthiophene) gelöst. Letztere ließen sich in organischen Lösungsmitteln verarbeiten und konnten somit durch Schleuderbeschichtung auf Trägern aufgebracht werden. Durch das zunehmende Umweltbewusstsein konzentrierte sich die Fachwelt auf die Entwicklung wasserlöslicher konjugierter Polymerer. Wiederum entstanden zunächst mit Sulfonatgruppen funktionalisierte Polythiophene. Aufgrund der Sulfonatgruppen waren diese Polythiophene in wässrigen Lösungen leichter löslich und die Verwendung unerwünschter Lösungsmittel wie Chloroform und Acetonitril wurde vermieden. Nach den ersten wasserlöslichen Polythiophenen folgten kurz darauf andere konjugierte Polymere, wie z.B. Polypyrrole, Polyaniline, Polyphenylene und Poly(phenylenvinylene).

Eines der erfolgreichsten und umweltfreundlichsten π-konjugierten Polymere ist das Poly(3,4-ethylendioxythiophen) (PEDT) (EP-A 339 340). Es wurde durch Mischen mit Polystyrolsulfonsäure (PSS) in eine verarbeitbare wässrige Dispersion überführt (EP-A 440 957). Die entstehende Mischung besitzt ausgezeichnete filmbildende Eigenschaften und verbindet hohe Leitfähigkeit mit hoher Transparenz.

Vor kurzem veröffentlichten Chevrot et al. (J. Electroanal. Chem. **1998,** 443, 217-226 und J. Phys. Chim. **1998,** 95, 1168-1171) die Synthese eines neuen 3,4-Ethylendioxythiophenderivats, das 4-(2,3-Dihydrothieno[3,4-b][1,4]dioxin-2-yl-methoxy)-1-butansulfonsäure-Natriumsalz (EDT-S).

Trotz mehrerer Versuche, dieses Monomer elektrochemisch in wässriger Lösung zu polymerisieren, schlugen alle Versuche von Chevrot et al., ein wasserlösliches Homopolymer zu erhalten, wegen der hohen Löslichkeit der entstehenden Oligomere/Polymere in Wasser fehl. Stattdessen gelang es den Autoren, ein 1:1-Copolymer aus EDT-S und 3,4-Ethylendioxythiophen, herzustellen. Das Derivat war jedoch wasserunlöslich.

Weitere, ebenfalls wasserlösliche Thiophenderivate sind in EP-A 628 560 beschrieben.

Während unserer Suche nach umweltfreundlichen Materialien mit im Vergleich zu PEDT/PSS ähnlichen oder verbesserten elektrischen und/oder optischen Eigenschaften, gelang nun die Herstellung von neuen wasserlöslichen π-konjugierten Polymeren ohne die Verwendung von PSS.

Gegenstand der Erfindung ist daher ein Verfahren zur Herstellung von wasserlöslichen π-konjugierten Polymeren, dadurch gekennzeichnet, dass monomere Thiophenderivate der Formel I 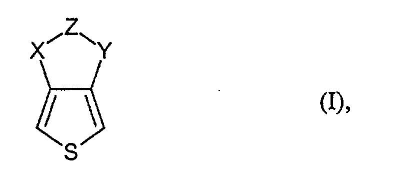 in der
- X und Y: gleich oder verschieden O, S, N-R¹,
- Z: -(CH₂)ₘ-CR²R³-(CH₂)ₙ-,
- R¹: Aryl, C₁-C₁₈-Alkyl oder Wasserstoff,
- R²: Wasserstoff oder -(CH₂)ₛ-O-(CH₂)ₚ-SO₃⁻M⁺,
- R³: -(CH₂)ₛ-O-(CH₂)ₚ-SO₃⁻M⁺,
- M⁺: ein Kation,
- m, n: gleich oder verschieden eine ganze Zahl von 0 bis 3,
- s: eine ganze Zahl von 0 bis 10 und
- p: eine ganze Zahl von 1 bis 18 bedeuten,
mit einem Oxidationsmittel in wässriger Lösung polymerisiert werden.

Geeignete Kationen M⁺ sind z.B. H⁺, Li⁺, Na⁺, K⁺, Rb⁺, Cs⁺ und NH₄⁺. Besonders geeignete Kationen sind Na⁺ und K⁺.

Bevorzugte Monomere im erfindungsgemäßen Verfahren sind Thiophenderivate der Formel I, in der
- X und Y: O,
- Z: -(CH₂)ₘ-CR²R³-(CH₂)ₙ-,
- R²: Wasserstoff oder -(CH₂)ₛ-O-(CH₂)ₚ-SO₃⁻M⁺,
- R³: -(CH₂)ₛ-O-(CH₂)ₚ-SO₃⁻M⁺,
- M⁺: ein Kation,
- m, n: gleich oder verschieden eine ganze Zahl von 0 bis 3,
- s: eine ganze Zahl von 0 bis 10 und
- p: eine ganze Zahl von 1 bis 18 bedeuten.

Besonders bevorzugte Monomere im erfindungsgemäßen Verfahren sind Thiophenderivate der Formel I, in der
- X und Y: O,
- Z: -(CH₂)-CR²R³-(CH₂)ₙ-,
- R²: Wasserstoff,
- R³: -(CH₂)ₛ-O-(CH₂)ₚ-SO₃⁻M⁺,
- M⁺: Na⁺ oder K⁺,
- n: 0 oder 1,
- s: 0 oder 1 und
- p: 4 oder 5 bedeuten.

Die monomeren Verbindungen sind bekannt.

Ihre Herstellung ist in Chevrot et al., *J. Electroanal*. *Chem.* **1998,** *443,* 217-226, Leclerc et al., *Adv*. *Mater*. **1997,** *9*, 1087-1094 und Reynolds et al., *Polymer Preprints* **1997,** *38* (*2*), 320 beschrieben.

Die Polymerisation der monomeren Verbindungen wird mit geeigneten Oxidationsmitteln in Wasser durchgeführt. Beispiele für geeignete Oxidationsmittel sind Eisen(III)-salze, insbesondere FeCl₃ und Eisen(III)-salze aromatischer und aliphatischer Sulfonsäuren, H₂O₂, K₂Cr₂O₇, K₂S₂O₈, Na₂S₂O₈, KMnO₄, Alkaliperborate und Alkali- oder Ammoniumpersulfate oder Mischungen dieser Oxidationsmittel. Weitere geeignete Oxidationsmittel sind beispielsweise in Handbook of Conducting Polymers (Ed. Skotheim, T.A.), Marcel Dekker: New York, 1986, Vol. 1, 46-57 beschrieben. Besonders bevorzugte Oxidationsmittel sind FeCl₃, Na₂S₂O₈ und K₂S₂O₈ oder Mischungen hiervon.

Das erfindungsgemäße Verfahren wird bevorzugt bei einer Reaktionstemperatur von -20 bis 100°C durchgeführt. Besonders bevorzugt sind Reaktionstemperaturen von 20 bis 100°C.

Der wässrigen Reaktionsmischung können auch weitere mit Wasser mischbare Lösungsmittel zugesetzt werden.

Geeignete Lösungsmittel sind z.B. aliphatische Alkohole wie Methanol, Ethanol, Isopropanol, Butanol, Diacetonalkohol, Ethylenglykol und Glycerin. Ebenfalls geeignet sind aliphatische Ketone wie Aceton und Methylethylketon sowie aliphatische Nitrile wie Acetonitril.

Die resultierenden Polythiophene sind sehr gut in Wasser löslich.

Bei den resultierenden Polythiophenen handeet es sich um Polythiophene der Formel II 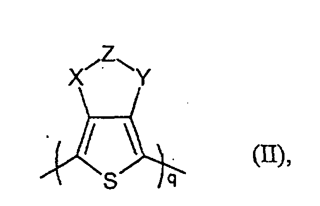 in der
- X und Y: gleich oder verschieden O, S, N-R¹,
- Z: -(CH₂)ₘ-CR²R³-(CH₂)ₙ-,
- R¹: Aryl, C₁-C₁₈-Alkyl oder Wasserstoff,
- R²: Wasserstoff oder -(CH₂)ₛ-O-(CH₂)ₚ-SO₃⁻M⁺,
- R³: -(CH₂)ₛ-O-(CH₂)ₚ-SO₃⁻M⁺,
- M⁺: ein Kation,
- m, n: gleich oder verschieden eine ganze Zahl von 0 bis 3,
- s: eine ganze Zahl von 0 bis 10,
- p: eine ganze Zahl von 1 bis 18 und
- q: eine ganze Zahl von 2 bis 10000 bedeuten.

Bevorzugte Polymere sind Polythiophene der Formel II, in der X und Y O bedeuten und Z, R², R³, M⁺, m, n, s, p und q die vorstehend genannte Bedeutung haben.

Besonders bevorzugte Polymere sind Polythiophene der Formel II, in der
- X und Y: O,
- Z: -(CH₂)-CR²R³-(CH₂)ₙ-,
- R²: Wasserstoff,
- R³: -(CH₂)ₛ-O-(CH₂)ₚ-SO₃⁻M⁺,
- M⁺: Na⁺ oder K⁺,
- n: 0 oder 1,
- s: 0 oder 1,
- p: 4 oder 5 und
- q: eine ganze Zahl von 3 bis 1000 bedeuten.

Die Polythiophene der Formel II liegen in kationischer Form vor. Die positiven Ladungen sind in der Formel nicht wiedergegeben, da die Ladungen über das gesamte Molekül delokalisiert sind.

Nach der Polymerisation kann die Polythiophen-Lösung weiter gereinigt werden. Hierzu gehört besonders die Entsalzung. Die Entsalzung erfolgt bevorzugt mit Ionenaustauschern, die im einfachsten Fall direkt der Polythiophen-Lösung zugesetzt werden. Alternativ hierzu ist auch die Entsalzung durch Säulenchromatographie möglich.

Die Polythiophene der Formel II eignen sich zur Herstellung elektrisch leitfähiger Beschichtungen.

Hierzu kann die Polythiophen-Lösung nach der Aufarbeitung durch bekannte Gießoder Drucktechniken auf Substrate aufgebracht werden. Beispiele für Gießtechniken sind das Vorhanggießen und das Aufschleudem (spin-coating). Beispiele für Drucktechniken sind der Tiefdruck, der Offsetdruck und der Siebdruck.

Beispiele für Substrate sind Glas und Kunststoffe wie z.B. Polycarbonate, Polyester und Polyacrylate.

Bevorzugte Schichtdicken sind 10⁻² bis 102 µm.

Der Oberflächenwiderstand von Schichten der Polythiophene der Formel II liegt zwischen 1 und 10¹⁴ Ω / □, bevorzugt zwischen 10 und 10⁹ Ω / □.

Zur Erhöhung der Leitfähigkeit der Beschichtungen können den Lösungen Additive zugegeben werden. Geeignete Additive sind in EP-A 686 662 beschrieben.

Zur Verbesserung der mechanischen Eigenschaften der Schichten hinsichtlich Haftung und Kratzfestigkeit können den Lösungen Bindemittel und Vernetzer zugesetzt werden. Hierzu geeignet sind Verfahren wie sie für das Poly(3,4-ethylendioxythiophen/Polystyrolsulfonsäure-System in EP-A 825 219 beschrieben sind.

Besonders wichtige Anwendungsgebiete der Polythiophene der Formel II sind z.B.:
- die Datenspeicherung,
- die optische Signalverarbeitung,
- die Unterdrückung elektromagnetischer Störungen (EMI),
- die Sonnenenergieumwandlung,
- wiederaufladbare Batterien,
- Elektroden,
- lichtemittierende Dioden,
- Feldeffekttransistoren,
- Sensoren,
- elektrochrome Scheiben,
- antistatische Materialien, insbesondere Folien für die Verpackung elektronischer Bauteile und Trägerfolien für fotografische Filme,
- Beschichtungen für Kopiertrommeln und
- die Durchkontaktierung von Leiterplatten und Multilayem.

Die erfindungsgemäß hergestellten Polythiophene werden bevorzugt zur Herstellung von Feststoffelektrolytkondensatoren auf Basis von Tantal, Niob oder Aluminium eingesetzt. Die Herstellung der Kondensatoren erfolgt nach folgenden Verfahrensschritten:
1. Elektrochemische Oxidation der Metallanoden zur Aufbringung der isolierenden Metalloxidschicht.
2. Ein- oder mehrmaliges Imprägnieren und Trocknen der Metallanoden mit einer Lösung der erfindungsgemäßen Polythiophene zum Aufbringen der leitfähigen Gegenelektrode.

Die so erhaltenen Kondensatoren zeichnen sich durch niedrige äquivalente Serienwiderstände und gute Hochfrequenzeigenschaften aus.

### Beispiele

Bei den nachfolgenden Versuchen wurde das Natrium-Salz von 4-(2,3-dihydrothieno [3,4-b][1,4]dioxin-2-yl-methoxy)-1-butansulfonsäure (EDT-S), hergestellt wie beschrieben durch Chevrot et al. (*J*. *Electroanal*. *Chem.* **1998,** *443*, 217-226), als Monomer eingesetzt.

### Beispiel 1

### Herstellung von Poly(4-(2,3-dihydrothieno[3,4-b][1,4]dioxin-2-yl-methoxy)-1-butansulfonsäure) (PEDT-S) mit FeCl₃ als Oxidationsmittel

0,496 g EDT-S (1,5 mmol) wurden unter Argon in 18 ml dest. Wasser gelöst. Anschließend wurden 0,97 g (6,0 mmol) FeCl₃ in einer Portion zugegeben. Die Lösung wurde danach 8 h bei RT (= Raumtemperatur) gerührt und 3 h auf 100°C erhitzt, abgekühlt und aufgearbeitet. Zur Aufarbeitung wurde die Lösung auf 1Gew.-% mit dest. Wasser verdünnt, 9 g Lewatit® S100 und 9 g Lewatit® MP 62 zugegeben und 4 h bei RT gerührt. Nachdem Abfiltrieren der Ionenaustauscher wurde eine dunkelblaue Polymerlösung erhalten.

| | |
|---|---|
| Feststoffgehalt | 1 Gew.-% |
| Eisengehalt | 0,0019 Gew.-% |
| Natriumgehalt | 0,24 Gew.-% |

1 g der Polymerlösung wurde mit je 1 g Wasser, Aceton und Methanol verdünnt und mit einem Rakel auf Polyethylenterephthalat-Folie aufgetragen (60 µm Nassfilmdicke). Der Oberflächenwiderstand der bei Raumtemperatur getrockneten Schicht betrug 10⁸ Ω/□.

| | |
|---|---|
| RT | Raumtemperatur |
| Lewatit® S100 | kationischer Ionenaustauscher der Bayer AG |
| Lewatit® MP 62 | anionischer Ionenaustauscher der Bayer AG |

### Beispiel 2

### Herstellung von Poly(4-(2,3-dihydrothieno[3,4-b][1,4]dioxin-2-yl-methoxy)-1-butansulfonsäure) (PEDT-S) mit Na₂S₂O₈ als Oxidationsmittel

Eine Lösung von Na₂S₂O₈ (0,267 g, 1,12 mmol) und Fe₂(SO₄)₃ (0,0025 g) in dest. Wasser (25ml) wurde entgast und unter Argon aufbewahrt. Das Natriumsalz von EDT-S (0,25 g, 0,76 mmol) wurde in einer Portion zugegeben und die Lösung für 24 h bei RT gerührt. Danach wurde noch 2 h by 100°C gerührt. Danach wurde das Reaktionsgemisch auf RT abgekühlt. Die dunkelblaue Lösung wurde mit dest. Wasser auf 1% Festgehalt verdünnt und mit Lewatit® S 100 (5 g) und Lewatit® MP 62 (5 g) für 1 h bei RT gerührt. Nach Abfiltrieren der Ionenaustauscher wurde eine dunkelblaue Polymerlösung erhalten.

## Patentansprüche

1. Verfahren zur Herstellung von wasserlöslichen π-konjugierten Polymeren, **dadurch gekennzeichnet, dass** monomere Thiophenderivate der Formel I 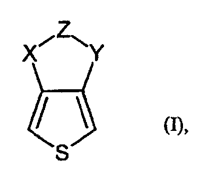 in der
X und Y gleich oder verschieden O, S, N-R¹,
Z -(CH₂)ₘ-CR²R³-(CH₂)ₙ-,
R¹ Aryl, C₁-C₁₈-Alkyl oder Wasserstoff,
R² Wasserstoff oder -(CH₂)ₛ-O-(CH₂)ₚ-SO₃⁻M⁺,
R³ -(CH₂)ₛ-O-(CH₂)ₚ-SO₃⁻M⁺,
M⁺ ein Kation,
m, n gleich oder verschieden eine ganze Zahl von 0 bis 3,
s eine ganze Zahl von 0 bis 10 und
p eine ganze Zahl von 1 bis 18 bedeuten,
mit einem Oxidationsmittel in wässriger Lösung polymerisiert werden.

2. Verfahren nach Anspruch 1, **dadurch gekennzeichnet, dass** monomere Thiophenderivate der Formel I, in der
X und Y O,
Z -(CH₂)-CR²R³-(CH₂)ₙ-,
R² Wasserstoff,
R³ -(CH₂)ₛ-O-(CH₂)ₚ-SO₃⁻M⁺,
M⁺ Na⁺ oder K⁺,
n 0 oder 1,
s 0 oder 1 und
p 4 oder 5 bedeuten,
polymerisiert werden.

3. Verfahren nach Anspruch 1, **dadurch gekennzeichnet, dass** als Oxidationsmittel FeCl₃, Na₂S₂O₈ oder K₂S₂O₈ oder Mischungen hiervon verwendet werden.

4. Verfahren nach Anspruch 1, **dadurch gekennzeichnet, dass** die Polymerisation bei einer Reaktionstemperatur von 20 bis 100°C durchgeführt wird.

## Claims

1. A process for the preparation of water-soluble π-conjugated polymers, **characterized in that** monomeric thiophene derivatives of the formula I 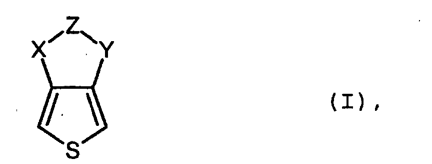 in which
X and Y are identical or different and are O, S or N-R¹,
Z is -(CH₂)ₘ-CR²R³-(CH₂)ₙ-,
R¹ is aryl, C₁-C₁₈-alkyl or hydrogen,
R² is hydrogen or -(CH₂)ₛ-O-(CH₂)ₚ-SO₃⁻M⁺,
R³ is -(CH₂)ₛ-O-(CH₂)ₚ-SO₃⁻M⁺,
M⁺ is a cation,
m and n are identical or different and are an integer from 0 to 3,
s is an integer from 0 to 10, and
p is an integer from 1 to 18,
are polymerized in aqueous solution using an oxidant.

2. A process as claimed in claim 1, **characterized in that** monomeric thiophene derivatives of the formula I in which
X and Y are O,
Z is-(CH₂)-CR²R³-(CH₂)ₙ-,
R² is hydrogen,
R³ is -(CH₂)ₛ-O-(CH₂)ₚ-SO₃⁻M⁺,
M⁺ is Na⁺ or K⁺,
n is 0 or 1,
s is 0 or 1, and
p is 4 or 5,
are polymerized.

3. A process as claimed in claim 1, **characterized in that** the oxidant used is FeCl₃, Na₂S₂O₈ or K₂S₂O₈, or mixtures thereof.

4. A process as claimed in claim 1, **characterized in that** the polymerization is carried out at a reaction temperature of from 20 to 100°C.

## Revendications

1. Procédé de préparation de polymères π-conjugués solubles dans l'eau, **caractérisé en ce qu'**on polymérise en solution aqueuse avec un agent d'oxydation, des dérivés monomères de thiophène de formule I 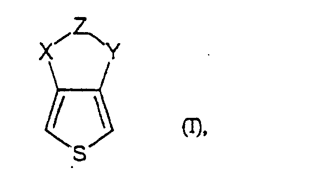 dans laquelle
X et Y signifient, de manière identique ou différente, O, S, N-R¹,
Z est -(CH₂)ₘ-CR²R³-(CH₂)ₙ-,
R¹ représente un aryle, un alkyle en C₁-C₁₈ ou un hydrogène,
R² représente un hydrogène ou -(CH₂)ₛ-O-(CH₂)ₚ-SO₃⁻M⁺,
R³ est -(CH₂)ₛ-O-(CH₂)ₚ-SO₃⁻M⁺,
M⁺ représente un cation,
m,n identiques ou différents, signifient un nombre entier de 0 à 3,
s représente un nombre entier de 0 à 10, et
p représente un nombre entier de 1 à 18.

2. Procédé selon la revendication 1, **caractérisé en ce qu'**on polymérise des dérivés monomères de thiophène de formule I, dans laquelle
X et Y signifient O,
Z est -(CH₂)-CR²R³-(CH₂)ₙ-,
R² représente un hydrogène,
R³ est -(CH₂)ₛ-O-(CH₂)ₚ-SO₃⁻M⁺,
M⁺ représente Na⁺ ou K⁺,
n signifie 0 ou 1,
s 0 ou 1, et
p signifie 4 ou 5.

3. Procédé selon la revendication 1, **caractérisé en ce qu'**on utilise comme agent d'oxydation du FeCl₃, du Na₂S₂O₈ ou du K₂S₂O₈ ou des mélanges de ceux-ci.

4. Procédé selon la revendication 1, **caractérisé en ce que** la polymérisation s'effectue à une température réactionnelle de 20 à 100°C.
